# EUROPEAN PATENT APPLICATION

(11) **EP 4 741 980 A1**
(43) Date of publication of application: **13.05.2026**
(21) Application number: 25214079.3
(22) Date of filing: 06.11.2025
(51) Int. Cl.: G05D 1/633, G05D 1/243, G05D 1/648, A01D 34/00

(54) **OBJECT CLASSIFICATION BASED DYNAMIC MACHINE POSITIONING**

(30) Priority: 07.11.2024 US 202463717549 P; 08.11.2024 US 202463718101 P; 15.10.2025 US 202519359468
(71) Applicant: Deere & Company, Moline, IL 61265 (US)
(72) Inventor: SANDOVAL, Joel, Cary, 27513 (US); LEWIS, Timothy, Fuquay Varina, 27526 (US); POWERS, Bradley, Santa Clara, 95054 (US); ANDERSON, Kent, Santa Clara, 95054 (US); CLONTZ, Wesley, Fuquay Varina, 27526 (US); FOTOUHI, Mo, Urbandale, 50131 (US); DADGAR, Bijan, Fuquay Varina, 27526 (US); MARRY, Christopher, Fuquay-Varina, 27526 (US)
(74) Representative: Reddie & Grose LLP

(57) **Abstract**

Systems, devices, and methods for autonomous mowing in turf environments are described. The mowing vehicle integrates manual controls, a display, and a controller connected to a sensor system all-around coverage. Sensors feed a vision processing unit that detects, classifies, and maps transient and non-transient objects. Modules within the vision processing unit handle object detection, classification, boundary generation, path planning, actuation, user interaction, and job quality monitoring. Path planning adapts to dynamic conditions, other machines, and changing object sizes, while the actuation module executes adjusted paths in real time. The user interface enables operator oversight and settings adjustments, with cloud connectivity for data storage and reuse. Job quality is assessed through sensor and image data, enabling corrective actions.

## Description

### CROSS REFERENCE TO RELATED APPLCIATIONS

This application claims priority to U.S. Provisional Application Serial No. 63/717,549 filed November 07, 2024, and U.S. Provisional Application Serial No. 63/718,101 filed on November 08, 2024.

### TECHNICAL FIELD

The present disclosure relates generally to systems, methods, and devices for object classification based dynamic machine positioning. More specifically it relates to adapting autonomous pathing based on real time identification of objects.

### BACKGROUND

Grass mowing machines, or mowers, may be manual and/or autonomous and are used to cut grass, also called turf. Some mowers may mow an area to be mowed according to a coverage plan or path plan. In such a scenario, mowers may encounter boundaries, which may be a boundary indicating a property line or a boundary around an obstacle or keep out area within an area to be mowed. Moreover, mowers may encounter obstacles. Such obstacles may be known to the mower in advance of encountering the obstacle, such as those described above with pre-identified boundaries, or such obstacles may be unexpected. Moreover, obstacles, even if known, may move or change size. In some situations, grass mowing machines may leave an area of uncut grass around a boundary and/or obstacle. Often, this uncut grass must then be trimmed. Trimming can increase the time required to completely cut an area of turf.

In some mowing applications, such as residential, commercial, and/or golf mowing, mowing is accomplished by a party that mows a plurality of areas. For example, a professional landscaping company may use one or more mowing devices to cut turf. Such a company may service a plurality of properties. Such a party may use one or more autonomous mowers to cut turf. In such a scenario, it may be beneficial to configure a property, job, and/or machine setup within one or more machines.

### SUMMARY

In some aspects, the techniques described herein relate to a method for performing autonomous actions in a turf environment, the method including: traversing, with an autonomous mowing machine, the turf environment along a planned path performing autonomous actions, the turf environment including a plurality of objects; capturing, using an imaging system on the autonomous mowing machine, while the autonomous mowing machine is performing autonomous actions, images representing the plurality of objects; for each object of the plurality: determining, using the captured images, whether the object is a transient object or a non-transient object; responsive to determining the object is a transient object, determining a first additional autonomous action to perform in the turf environment; and response to determining the object is a non-transient object, determining a second additional autonomous action different from the first additional autonomous action to perform in the turf environment; and performing, using the autonomous mowing machine traversing the planned path, the first additional autonomous action or the second additional autonomous action.

In some aspects, the techniques described herein relate to a method, wherein determining whether the object is a transient object or a non-transient object includes using both depth information and visual information from the imaging system.

In some aspects, the techniques described herein relate to a method, wherein the first additional autonomous action for an object identified as transient a transient object includes at least one of: stopping the autonomous mowing machine, slowing the autonomous mowing machine, rerouting around the transient object, or waiting for a movement of the transient object.

In some aspects, the techniques described herein relate to a method, wherein the second additional autonomous action for an object identified as a non-transient object includes at least one of: modifying the planned path to a predefined distance to the non-transient object, avoiding the non-transient object by another predetermined distance, updating a boundary map, or storing location information of the non-transient object in a data storage.

In some aspects, the techniques described herein relate to a method, further includes: determining that the non-transient object is in motion; in response, modifying a label of the non-transient object to transient object; and modifying the planned path and actuate the modified planned path.

In some aspects, the techniques described herein relate to a method, further includes: determining that the non-transient object is instead a transient object; in response, modifying a label of the transient object to non-transient object; and in response, performing the first additional autonomous action instead of the second additional autonomous action.

In some aspects, the techniques described herein relate to a method, wherein determining whether the object is a transient object or a non-transient object further includes: receiving, from a client device in communication with the autonomous mowing machine, a modification to a label of the determination.

In some aspects, the techniques described herein relate to a method, wherein the autonomous mowing machine performs the first additional autonomous action or the second additional autonomous action based on the modification to the label received from the client device.

In some aspects, the techniques described herein relate to a non-transitory computer readable storage medium including instructions for performing autonomous actions in a turf environment, the instructions, when executed by one or more processors, causing the processors to perform steps including: traversing, with an autonomous mowing machine, the turf environment along a planned path performing autonomous actions, the turf environment including a plurality of objects; capturing, using an imaging system on the autonomous mowing machine, while the autonomous mowing machine is performing autonomous actions, images representing the plurality of objects; for each object of the plurality: determining, using the captured images, whether the object is a transient object or a non-transient object; responsive to determining the object is a transient object, determining a first additional autonomous action to perform in the turf environment; and response to determining the object is a non-transient object, determining a second additional autonomous action different from the first additional autonomous action to perform in the turf environment; and performing, using the autonomous mowing machine traversing the planned path, the first additional autonomous action or the second additional autonomous action.

In some aspects, the techniques described herein relate to a non-transitory computer readable storage medium, wherein determining whether the object is a transient object or a non-transient object includes using both depth information and visual information from the imaging system.

In some aspects, the techniques described herein relate to a non-transitory computer readable storage medium, wherein the first additional autonomous action for an object identified as transient a transient object includes at least one of: stopping the autonomous mowing machine, slowing the autonomous mowing machine, rerouting around the transient object, or waiting for a movement of the transient object.

In some aspects, the techniques described herein relate to a non-transitory computer readable storage medium, wherein the second additional autonomous action for an object identified as a non-transient object includes at least one of: modifying the planned path to a predefined distance to the non-transient object, avoiding the non-transient object by another predetermined distance, updating a boundary map, or storing location information of the non-transient object in a data storage.

In some aspects, the techniques described herein relate to a non-transitory computer readable storage medium wherein the one or more processors perform steps including: determining that the non-transient object is in motion; in response, modifying a label of the non-transient object to transient object; and modifying the planned path and actuate the modified planned path.

In some aspects, the techniques described herein relate to a non-transitory computer readable storage medium, wherein the one or more processors perform steps including: determining that the non-transient object is instead a transient object; in response, modifying a label of the transient object to non-transient object; and in response, performing the first additional autonomous action instead of the second additional autonomous action.

In some aspects, the techniques described herein relate to a non-transitory computer readable storage medium, wherein determining whether the object is a transient object or a non-transient object further causes the one or more processors to perform steps including: receiving, from a client device in communication with the autonomous mowing machine, a modification to a label of the determination.

In some aspects, the techniques described herein relate to a method, wherein the autonomous mowing machine performs the first additional autonomous action or the second additional autonomous action based on the modification to the label received from the client device.

In some aspects, the techniques described herein relate to an autonomous mowing machine including: an imaging system configured to capture images representing a plurality of objects in a turf environment; a navigation system configured for controlling traversal of the autonomous mowing machine in the turf environment; one or more processors; A non-transitory computer readable storage medium including instructions for performing autonomous actions in the turf environment, the instructions, when executed by one or more processors, causing the processors to perform steps including: traversing, using the navigation system, the turf environment along a planned path performing autonomous actions, the turf environment including a plurality of objects; capturing, using the imaging system and while the autonomous mowing machine is performing autonomous actions, images representing the plurality of objects; for each object of the plurality: determining, using the captured images, whether the object is a transient object or a non-transient object; responsive to determining the object is a transient object, determining a first additional autonomous action to perform in the turf environment; and response to determining the object is a non-transient object, determining a second additional autonomous action different from the first additional autonomous action to perform in the turf environment; and performing, using the autonomous mowing machine traversing the planned path, the first additional autonomous action or the second additional autonomous action.

In some aspects, the techniques described herein relate to an autonomous mowing machine, wherein determining whether the object is a transient object or a non-transient object further causes the one or more processors to use both depth information and visual information from the imaging system.

In some aspects, the techniques described herein relate to an autonomous mowing machine, wherein the first additional autonomous action for an object identified as transient a transient object includes at least one of: stopping the autonomous mowing machine, slowing the autonomous mowing machine, rerouting around the transient object, or waiting for a movement of the transient object.

In some aspects, the techniques described herein relate to an autonomous mowing machine, wherein the second additional autonomous action for an object identified as a non-transient object includes at least one of: modifying the planned path to a predefined distance to the non-transient object, avoiding the non-transient object by another predetermined distance, updating a boundary map, or storing location information]

### BRIEF DESCRIPTION OF THE DRAWINGS

FIG. 1A illustrates a front perspective view of a mowing vehicle, in accordance with one or more embodiments.
FIG. 1B illustrates a back perspective view of a mowing vehicle, in accordance with one or more embodiments.
FIG. 1C illustrates a plane view of the mowing vehicle, in accordance with one or more embodiments.
FIG. 2 illustrates a block diagram of an implementation of a mowing vehicle, in accordance with one or more embodiments.
FIG. 3 illustrates a block diagram of the system environment for the mowing vehicle, in accordance with one or more embodiments.
FIG. 4 illustrates a mowing vehicle detecting transient and non-transient objects, in accordance with one or more embodiments.
FIG. 5 illustrates an exemplary process chart of boundary generation, in accordance with one or more embodiments.
FIG. 6 illustrates an exemplary process chart of path generation, in accordance with one or more embodiments.
FIG.7 illustrates a workflow diagram for performing autonomous actions in a turf environment, in accordance with one or more embodiments.
FIG.8 illustrates a workflow diagram for generating a planned path for performing autonomous actions in a turf environment, in accordance with one or more embodiments.
FIG. 9 illustrates an example computer system, according to an example embodiment.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION

### I. Operation Environment

The operating environment may be defined as the area in which the autonomous mowing machine traverses while performing autonomous actions. In one or more embodiments, the operating environment may include a plurality of objects, such as transient objects (e.g., people, animals, or moving equipment) and non-transient objects (e.g., trees, sidewalks, curbs, or landscaping features). A planned path within the operating environment may be established to guide the mowing machine across the area in a systematic and efficient manner. The planned path may be understood as a sequence of trajectories that ensures the mowing machine covers the defined area while respecting the external boundary of the environment.

As the mowing machine follows the planned path, it may execute autonomous actions in response to conditions encountered in the operating environment. These autonomous actions may include moving forward, turning, slowing, stopping, rerouting, or adjusting travel distances relative to objects that are detected. In one or more implementations, the mowing machine may modify its planned path dynamically as new object information is received.

### II. Example Machine Configurations

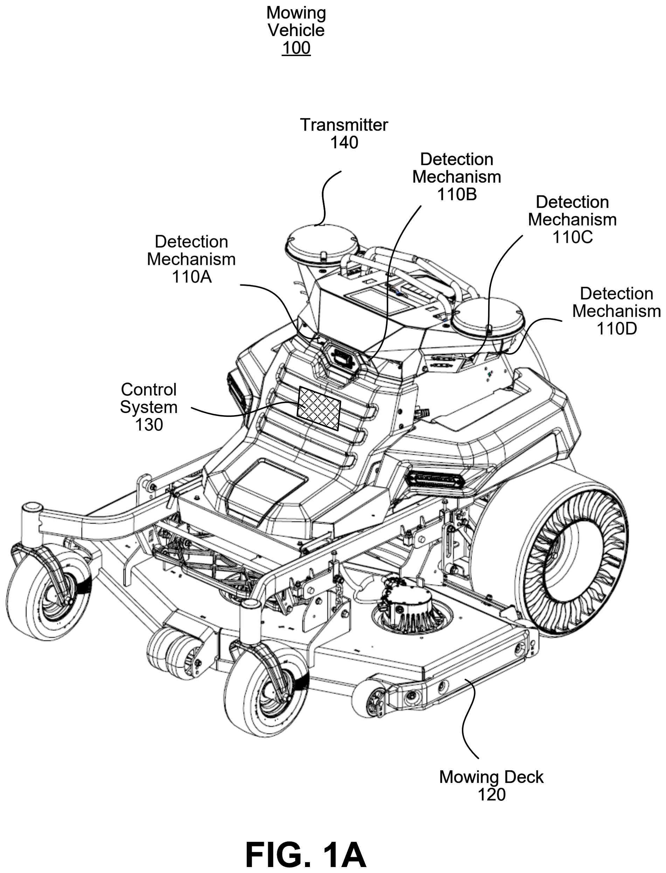

FIGs. 1A-1C illustrate a number of views of an example mowing vehicle 100, in accordance with one or more embodiments. The mowing vehicle 100 is configured for performing a mowing action. The mowing vehicle 100 may operate autonomously, manually, or in a hybrid manner.

FIG. 1A illustrates a front perspective view of the mowing vehicle 100, in accordance with one or more embodiments. The front view illustrates the mowing vehicle 100 including the detection mechanisms 110A, 110B, 110C, and 110D, a mowing deck 120, a control system 130, and a transmitter 140.

The detection mechanisms 110A, 110B, 110C, and 110D may measure or detect information describing the operating environment of the mowing vehicle 100. In one or more embodiments, the detection mechanisms 110 may be cameras, LIDAR sensors, other depth-and-ranging sensors, or some combination thereof. In the embodiment shown, there are two detection mechanisms 110A & 110B (e.g., cameras) oriented forward, along a primary direction of travel. Two detection mechanisms 110C & 110D (e.g., cameras) are oriented towards a left side of the vehicle.

The mowing deck 120 is an embodiment of a landscaping mechanism. In the embodiment shown, the mowing deck 120 is situated towards a bottom of the mowing vehicle 100, proximate to the ground. The mowing deck 120 may include a large shield, under which are one or more motorized blades for mowing plants in the environment. Each of the motorized blades may be individually addressable and operable by the mowing vehicle 100. The mowing deck 120 may be further coupled to a chute that is configured to guide debris ingested by the mowing vehicle 100, i.e., the mowing deck 120, in a particular direction. In some embodiments, a vessel may be implemented and coupled to the chute, such that the vessel is configured to store debris from the mowing vehicle 100 during operation. The motorized blades may further include a braking system for emergent stopping of the blades from spinning.

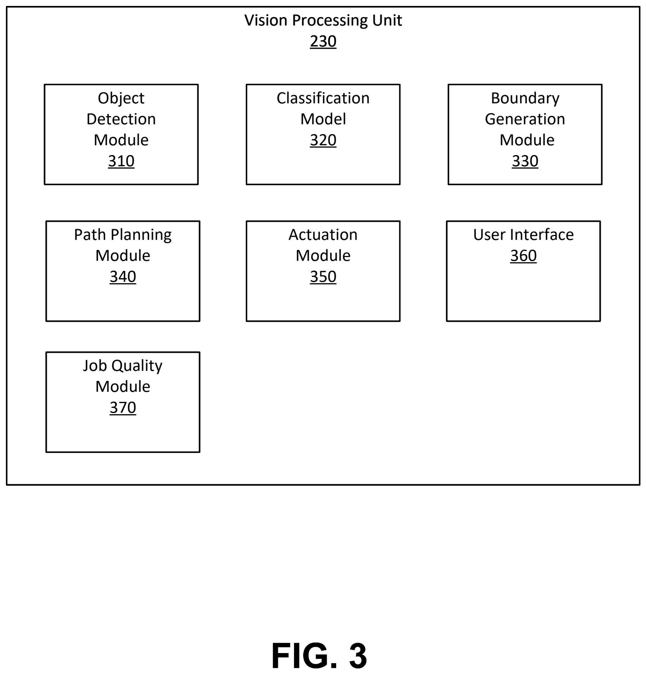

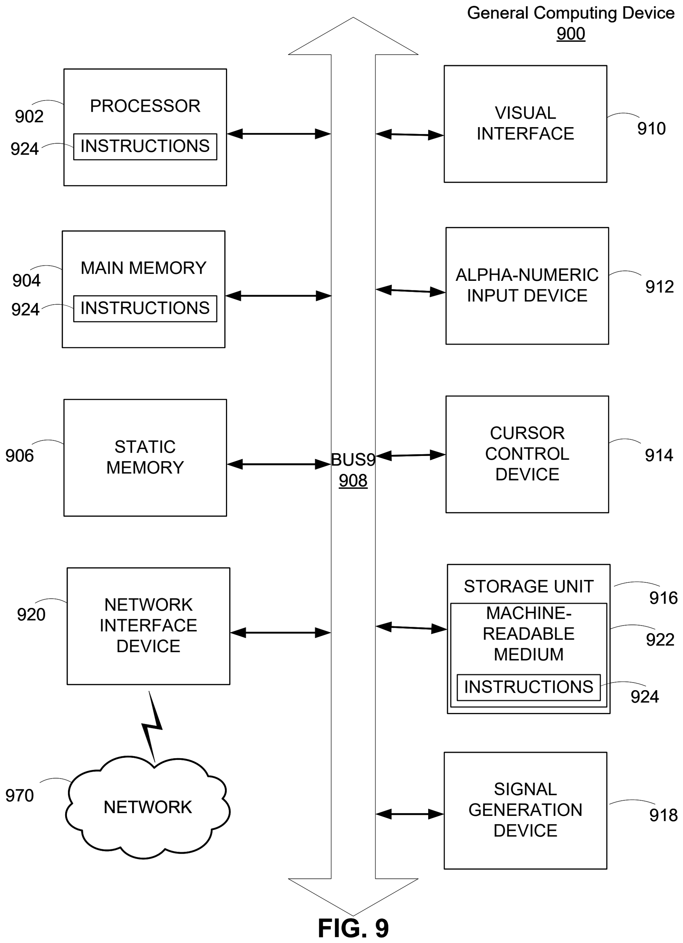

The control system 130 analyses data received by the detection mechanisms 110 and generates control signals for controlling operation of the mowing vehicle 100. In one or more embodiments, the control system is further configured to generate one or more virtual safety bubbles for safe navigation of the mowing vehicle 100. The control system 130 may generate the one or more virtual safety bubbles based on the configuration of the mowing vehicle 100. Generation of the safety bubbles is further described below in FIGs. 3-10. With the safety bubbles, the control system 130 may identify and track objects in the operating environment to determine whether the objects in the operating environment would create a safety concern, e.g., typically if the mowing vehicle 100 and the object are trajected to collide. If the object interacts with the virtual safety bubble, the control system 130 may enact responsive measures to promote safe navigation. Example responsive measures are described below in FIGs. 11-19. The control system 130 can be positioned anywhere on the mowing vehicle 100, e.g., internally, externally, etc.

The transmitter 140 provides for wireless communication with other computing devices or systems, e.g., across a wireless network. The transmitter 140 may be a component of the control system 130. The transmitter 140 may be configured to receive and to transmit communications.

In some embodiments, the mowing vehicle 100 further includes an alert system for generating alerts to caution any passerby in the operating environment. The alert system may include a speaker system for generating audio alerts, one or more light emitters for generating visual alerts, another type of emitter, or some combination thereof.

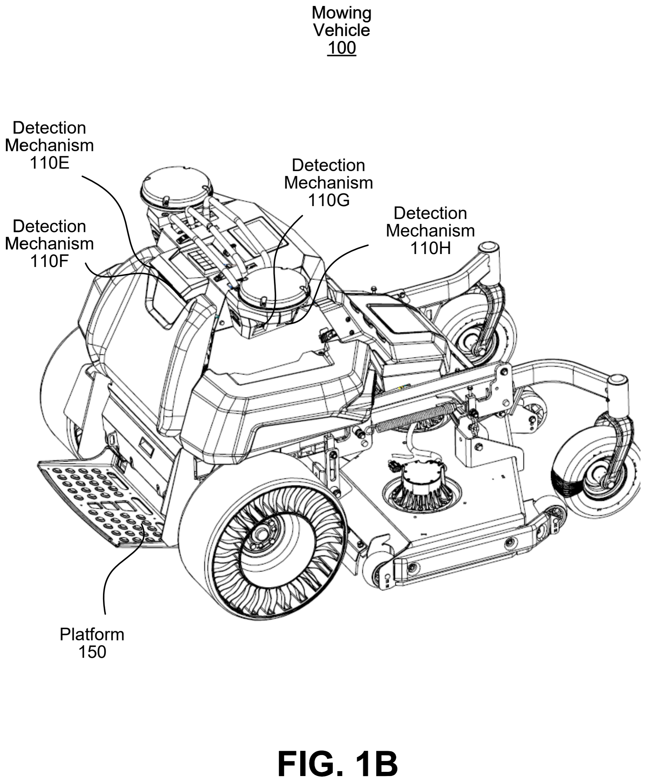

FIG. 1B illustrates a back perspective view of the mowing vehicle 100, in accordance with one or more embodiments. The mowing vehicle 100 may include additional detection mechanisms 110E, 110F, 110G, and 110H. Detection mechanisms 110E & 110F are oriented rearward. Detection mechanisms 110G & 110H are oriented to the right of the vehicle. The mowing vehicle 100 may further include a platform 150 for an operator to ride along and/or to manually operate the mowing vehicle 100.

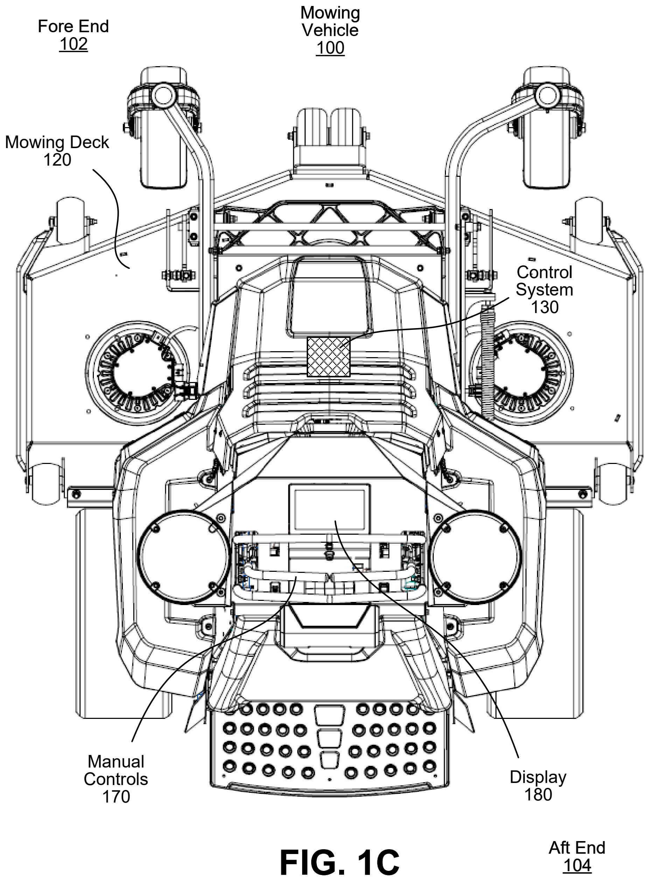

FIG. 1C illustrates a top-down view of the mowing vehicle 100, in accordance with one or more embodiments. The top-down view further illustrates manual controls 170 and a display 180.

The manual controls 170 may include a switch for switching the mowing vehicle 100 from autonomous operation into manual operation, or vice versa. The manual controls 170 may further include other manual inputs for controlling the operation of the mowing vehicle 100, e.g., for navigating the mowing vehicle 100, for activating the mowing deck 120, engaging the alert system, etc.

The display 180 is an electronic display that is configured to provide visual content to the operator. The display 180 may present a state of the mowing vehicle 100. The display 180 may further present a user interface, which may present interactable elements for an operator to further provide manual input in the operation of the mowing vehicle 100.

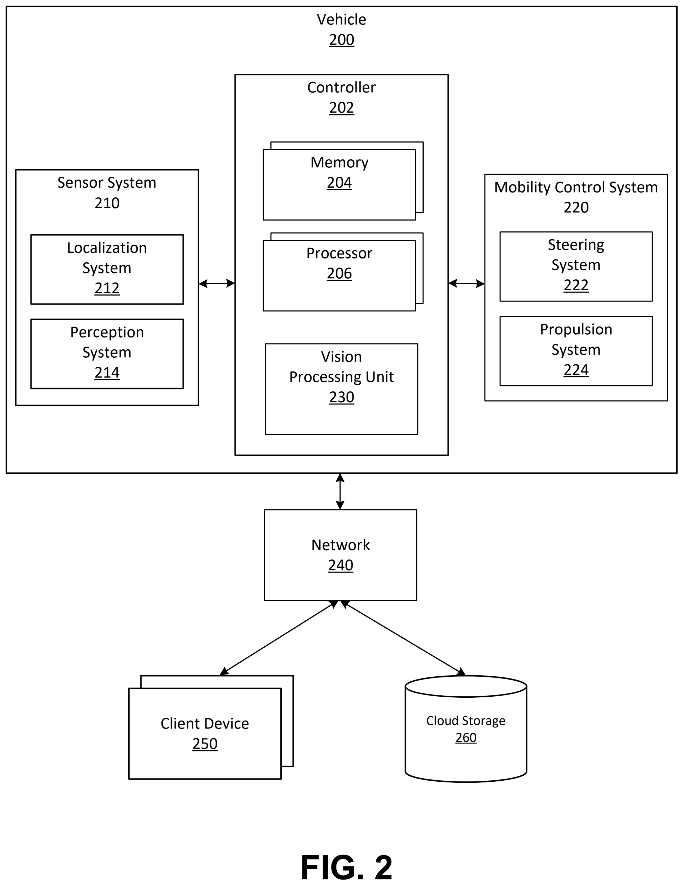

FIG. 2 illustrates an example of an implementation of at least a portion of a vehicle **200** (e.g., mowing vehicle 100). The vehicle **200** may include a controller **202** (e.g., control system 130), which may include at least one memory **204,** at least one processor **206** and a vision processing unit **230.** The controller **202** may be in communication with a sensor system **210** which may include a localization system **212** and a perception system **214** to receive input from. The localization system **212** may include, but is not limited to, a GPS system. The perception system **214** may classify terrain as turf, sidewalk, landscape, trees, etc.

The sensor system **210** may include one or more detection mechanisms (e.g., detection mechanism **110)** configured to capture data representative of the environment surrounding the vehicle **200.** In one embodiment, the sensor system **210** may comprise an array of detection mechanisms configured to capture images of the environment, where the image data represents a plurality of objects in proximity to the mowing vehicle. The sensor system **210** may also include cameras or other imaging devices for visual data collection. The sensor system **210** may have a field of view defined by the coverage of its detection mechanisms, and because it may be implemented as an array, the collective fields of view of the individual detection mechanisms may be composited to form a 360-degree coverage area surrounding the vehicle **200.**

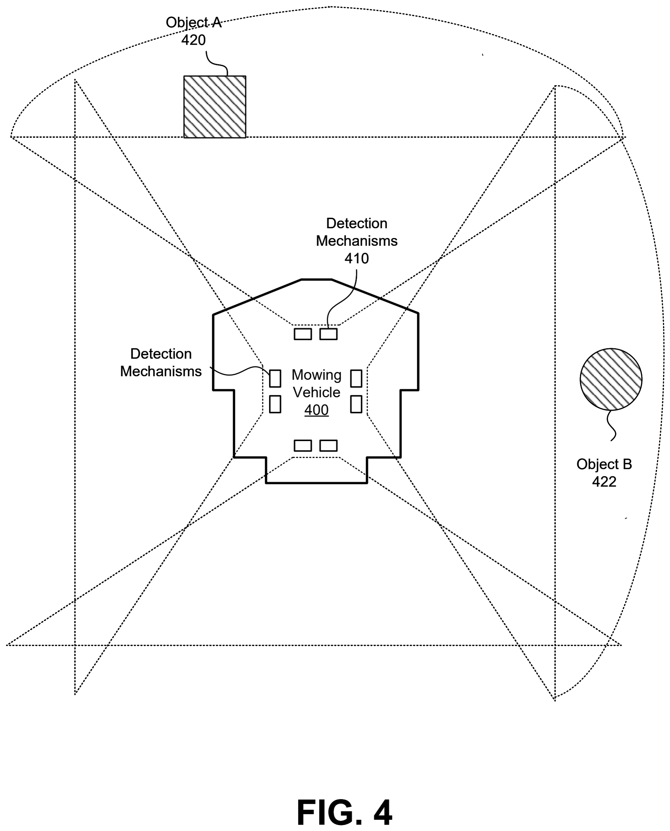

For example, referring to FIG. 4, the mowing vehicle **400** may include detection mechanisms **410** arranged around the mowing vehicle **400** to provide overlapping fields of view. In one or more embodiments, each detection mechanism **410** may have a defined field of view, and the aggregate of these fields may create a 360-degree coverage area surrounding the mowing vehicle **400.** As shown in FIG. 4, the detection mechanisms **410** may detect objects such as object A **420** and object B **422** within this coverage area. The captured sensor data may then be provided to the vision processing unit 230, where the object detection module **310** may process the input to determine the spatial position and boundaries of the detected objects. This configuration allows the vehicle **400** to continuously monitor its environment, update its environmental map, and support subsequent mowing operations.

Returning again to FIG. 2, also in communication with the controller **202** is a mobility control system **220,** which may include a steering system **222** and a propulsion system **224.** The steering system **222** may be of any type, including but not limited to Ackerman and differential steering systems, and may control the direction of the mower. The propulsion system **224** may be of any type, including but not limited to gas and/or electric propulsion system. The device may be in communication with one or more client devices **250** and/or the cloud storage **260** via a network **240.** For example, cloud storage may be used.

The memory **204** may store data, including but not limited to, localization system data, perception system data, path plans, and all data described herein. The memory **204** may also store instructions to instruct the processor **206** to execute the invention described herein. The controller **202** may command the mower, the mobility control system **220** to take one or more actions. A device of the present invention may include additional or fewer components without departing from the scope of the invention.

The vision processing unit **230** processes input (e.g., sensor data) from various sensors, such as cameras, LIDAR, RADAR, and ultrasonic devices, analyzing the working environment of the mower vehicle. The vision processing unit **230** may detect objects and apply classification models to determine whether they are transient and non-transient objects. The vision processing unit **230** may generate boundaries and develop path planning strategies that allow the mower to efficiently navigate around the working environment. Based on the analysis, the vision processing unit **230** may provide actuation commands to the steering and propulsion systems, ensuring the mower vehicle to accurately operate with various mowing environmental conditions. The vision processing unit **230** may also interact with a user interface to provide feedback and may assess job quality, such as turf health and cut consistency. The models and modules of the vision processing unit will be discussed in further detail in conjunction with FIG. 3.

### Vision Processing Unit

FIG. 3 illustrates a block diagram of the system environment for the mowing vehicle, in accordance with one or more embodiments. The vision processing unit **230** process data from the sensor system **210** and provides actuation commands to the mobility control system 220. The vision processing unit **230** includes an object detection module **310,** a classification model **320,** a boundary generation module **330,** a path planning module **340,** an actuation module **350,** a user interface **360** and a job quality module **370.** The vision processing **230** unit may include additional or different elements, and the functionality of one element may be provided by a different element.

### Object detection

The object detection module **310** processes input received from the sensor system **210,** including sensor data to identify objects within the mowing environment. Based on these sensor data, the module may generate three-dimensional object representations, such as point clouds, depth maps, etc. that provide precise spatial locations and boundaries of detected objects. The object detection module **310** may process the input to identify the spatial position and boundary of the detected objects. The object detection module **310** may further distinguish between previously mapped objects and newly detected objects, dynamically updating the environmental map in real time.

The classification model **320** determines whether the object is a transient object or a non-transient object and further identifies various types of actions for the mowing vehicle **400** to perform in response. Transient objects are those that may move in space or change over time. Transient objects may include, for example, people, animals, moving equipment, etc. Non-transient objects are those that do not move in space or change over time. Non-transient ojbects may include, for example, trees, sidewalks, curbs, landscaping features, etc. For transient objects, the mowing vehicle **400** may perform actions such as stopping, waiting, rerouting, or notifying an operator, thereby ensuring safe operation in dynamic environments. For non-transient objects, the mowing vehicle **400** may perform actions such as adjusting its path plan to traverse around an object, modifying boundary definitions, or updating the environmental map for future mowing operations.

The classification model **320** may use a machine learning model that processes captured images and depth information from sensor system **210.** The captured images may include sequential image data collected from detection mechanisms of the mowing vehicle **400,** which provide visual information such as shape, color, and texture of objects in the environment. The depth information may represent the distance of each object or pixel in the image relative to the mowing vehicle, which provides a three-dimensional context for the classification process.

The machine learning model may be configured as an object detection or segmentation network (e.g., Faster R-CNN, YOLO, Mask R-CNN, DeepLab, etc.). In one or more embodiments, a segmentation mapping process may be performed as a preprocessing stage prior to classification. For example, pixel-level segmentation may operate by analyzing the features of each pixel, such as color, texture, and spatial relationship to neighboring pixels, and assigning each pixel to a corresponding object class. Neighboring pixels with similar features are grouped together into regions, and discontinuities in features are used to define object edges. Thus, the segmentation map may turn raw images into a structured representation of the environment by identifying the object boundaries and organizing the operating environment into labeled regions.. This preprocessing enables the machine learning model to more reliably distinguish between objects that are adjacent, overlapping, or visually similar.

The classification model **320** may then output a set of labeled objects, each associated with a transient or non-transient classification. That is, each identified object will be labeled as transient or non-transient. Each labelled object will be linked to recommended actions based on its associated label. For example, if the classification model **320** identifies a person (transient), the recommended operation may include stopping or waiting until the individual leaves the mowing area. By contrast, if the classification model **320** identifies a tree (non-transient), the recommended operation may include adjusting the planned path to mow around the tree while maintaining safe clearance. These outputs may then be provided to subsequent modules, such as the boundary generation module **330** and the path planning module **340,** to support navigation and mowing operations. In some configurations, the linked actions may be based on both the identified object (e.g., ball, tree, grass, etc.) and its corresponding label.

Notably, the classification model **320** may also leverage RADAR and/or LIDAR information in identifying transient and non-transient objects. To expand, the vision processing unit **230** may ingests raw point clouds from one or more 3-D/4-D radar sensors together with the visual and/or depth information. The vision processing system 230 may augment the vision and/or depth information with the radar information, or the vision processing system 230 may process the radar information independently. Using this information, the classification model 320 executes a classifier that considers radar information such as instantaneous Doppler rate, micro-Doppler signatures that reveal motion, temporal consistency of the radar cross-section, etc. in determining whether an object is transient or non-transient. For example, objects that exhibit sustained non-zero Doppler or micro-Doppler modulation are tagged as transient, whereas returns whose Doppler rate remains at or near zero for a configurable dwell time are treated as non-transient

### Boundary Generation Process

The boundary generation module **330** generates boundaries of the mowing environment as the mowing vehicle performs mowing actions.

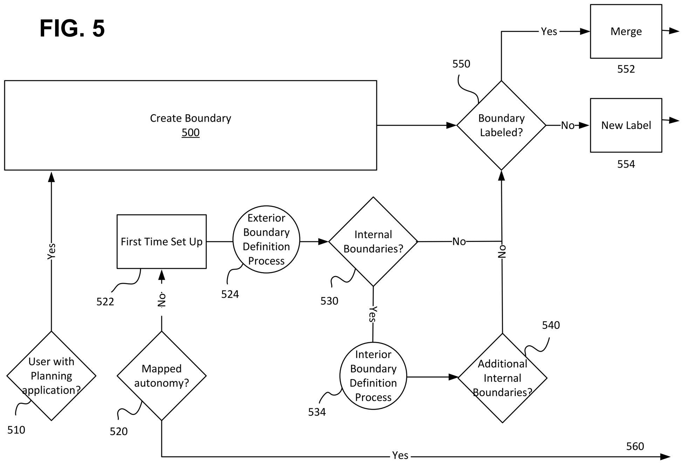

FIG. 5 illustrates an exemplary process chart of boundary generation, in accordance with one or more embodiments. As shown in FIG. 5, the steps start by determining whether the user has access to a planning application **510** for the mowing vehicle. A planning application may store, and access information related to one or more properties, one or more jobs, and one or more mowing vehicles. If the user has a planning application ("yes" to **510),** the planning application may be used to create boundaries **500** with the preexisting data of the corresponding mowing machine. The boundary generation module **330** may take the next step to ask if labeled boundaries exist yet for the preexisting boundary data. If labeled data exists, the boundary generation module 330 merges the predefined boundary data with the newly collected machine data **552.** If no labeled data exists, the boundary generation module **330** cleans, processes, and labels **554** the boundaries.

The boundary generation module **330** may take another step, the method asking whether the property has already been mapped for autonomy **520.** If yes, an existing path plan for the property may exist, boundary generation module **330** continues to steps of job set up. The further details of which are discussed below in conjunction with FIG. 5. If the site has not yet been mapped, the boundary generation module **330** initiates a first-time setup process **522.** The first-time setup may include an exterior boundary definition process **524,** during which the operator of the mowing machine may disable the autonomy switch, initiate a boundary definition run, drive the exterior boundaries, and then end the boundary definition run. The operator herein may refer to a crew member, technician, or human user responsible for supervising or interacting with the mowing vehicle during setup and operation.

Using the collected position information and visual information from the sensor system **220,** the boundary generation module **330** determines the exterior boundary that defines the limits of the mowing area. For example, the collected position information may include GPS coordinates, odometry data, or localization outputs that record the mowing vehicle's path as it drives around the edge of the property. At the same time, visual information may provide confirmation of physical features, such as fences, curbs, or edges of turf, that mark the limits of the property. Then the boundary generation module 330 may generate a closed polygon or boundary line that represents the exterior boundary of the mowing area. This exterior boundary may then be stored and used as a reference for subsequent job setup process and path planning.

After exterior boundaries are defined, the boundary generation module **330** determines whether the mow area contains the internal boundaries **530.** If yes, the boundary generation module **330** initiates another boundary definition process **534,** during which the operator of the mowing machine may initiate a boundary definition run, drive the interior boundaries, and then end the boundary definition run. The boundary generation module **330** then checks whether there are additional internal boundaries **540.** For example, if the mowing area contains multiple flower beds, the vehicle may be driven around each feature in sequence to record its boundary. In such cases, the boundary definition process **534** may be repeated for each internal feature until all internal boundaries are captured. Once external and internal boundaries are captured, the process may proceed to check whether the collected boundaries have been labeled **550** and either be merged **552** or newly labeled **554.**

In one embodiment, when generating a boundary of the operating environment, the boundary generation module **330** may distinguish between transient and non-transient objects to determine how action boundaries are assigned. Transient objects may be associated with action boundaries that are greater in extent to ensure additional clearance and safety margins around unpredictable movement. By contrast, non-transient objects may be assigned smaller action boundaries, allowing the mowing vehicle to travel closer in order to trim the turf more neatly and reduce the amount of uncut grass left for manual trimming.

Additionally, in an embodiment, the boundary generation module **330** may autonomously generate a boundary during operation of the farming machine. For instance, the boundary generation module **330** may autonomously generate a boundary as a user operates the machine in the work environment (e.g., automatically generates the boundary during normal operation of the machine). In a configuration, the boundary generation module **330** may generate a boundary without a human operator (e.g., generating and executing a boundary configuration paths around the work environment).

### Job Setup

Outputs of the boundary generation module **330** may be employed to generate a job. A job is some set of actions that the autonomous mowing machine performs in the turf environment. As an example, the job may be a path for the autonomous mowing machine to traverse in the turn environment to perform various autonomous actions.

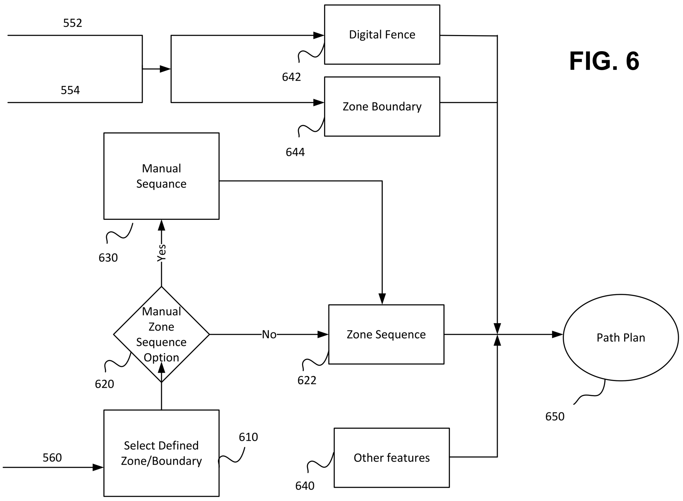

FIG. 6 illustrates an exemplary process chart of a job setup, in accordance with one or more embodiments. As shown in FIG. 6, the outputs of FIG. 5, including merged boundaries **552** and newly labeled boundaries **554,** may be provided to generate a digital fence 642 (e.g., a virtual boundary restricting the mowing area) and zone boundaries **644.** In parallel, if the property has previously been mapped for autonomy **560,** the boundary generation module **330** may select a defined zone or boundary **610.** Once a zone or boundary is selected, the operator may determine whether the zones will be manually sequenced **620.**

If the operator selects manual sequencing, the operator performs a manual sequence process **630,** obtaining a zone sequence **622.** If the operator does not select manual sequencing, the boundary generation module **330** carries out automated zone sequencing. In either case, the result is the zone sequence **622** that may be refined with digital fence data **642,** zone boundary data **644,** or additional operator-specified features **640.** Such features may include, for example, a rally point where the mowing vehicle or crew members meet upon completion of the job, or adjustments to mow patterns or group headings. These combined inputs are then used to generate a path plan **650,** which governs how the mowing vehicle executes its autonomous mowing actions within the defined mowing area.

### Path Planning

The path planning module **340** generates and updates a path plan for the mowing vehicle **400** to follow within the operating environment. In generating the plan, the module may consider a set of labeled objects provided by the classification model **320,** boundaries defined either automatically or manually, and the types of actions that the vehicle is capable of performing. A path plan may include the boundaries of the area to be covered, the sequences of passes across the mowing area, and the turns required to achieve complete coverage. The initial path plan may be created using any suitable method, including predefined templates, user/operator input, or autonomous generation based on boundary information. The path planning module **340** may further incorporate object information to ensure that transient and non-transient objects are appropriately considered in the planned path.

The initial path plan, however, may be disrupted by detected objects, and the path planning module **340** may dynamically modify the path to address such disruptions. For example, if the mowing vehicle identifies a transient object such as a person entering the mowing area, the path planning module **340** may adjust the plan by stopping or rerouting until the person is no longer present. In other examples, if an operator specifies that the mower should maintain a clearance around an object, the path planning module **340** module may adjust the path accordingly to leave uncut turf, or alternatively command the mower to travel closer to reduce trimming. The path planning module **340** may then update the remainder of the path plan to ensure all areas of turf are mowed despite the modification.

In one embodiment, the path planning module 340 may also consider changes to the labels for each object during operation. For example, a bicycle that was initially labeled as a non-transient object may begin to move due to wind or other forces, causing it to be reclassified as a transient object. Following such adjustments, the path planning module **340** may update the remainder of the path to ensure adequate coverage of the mowing area while maintaining efficiency and safety.

In some embodiments, the path planning module **340** may also consider the presence of additional machines operating in the same mowing area, therefore adjusting the planned path to avoid interference, coordinate movement with other autonomous vehicles, or maintain safe distances. Notifications may be provided to an operator at any step of the process, such as prompting the operator to confirm changes to the path plan. The path planning module **340** may also account for objects that change size over time, such as trees, bushes, or erosion, ensuring that the generated paths remain accurate and minimize the need for manual trimming. In some cases, the path planning module **340** may communicate with other machines to exchange positional or operational data. Alternatively, the system may notify an operator of intervention if conditions require human oversight.

In some cases, the path planning module **340** may further trigger the vehicle to measure the distance from the mowing vehicle to one or more objects and, if necessary, modify the path plan to either avoid the objects or, travel closer to them to reduce the trimming operations.

By way of example, a generated path plan may be represented as structured data (e.g., in JSON format) that includes the boundaries of the mowing environment, the labeled objects within those boundaries, and the corresponding autonomous actions. For instance:

```
 {
 "boundaries": {
  "external": "Polygon A",
  "internal": ["Tree Zone", "Flower Bed Zone"]
 },
 "objects": [
  {"id": 1, "type": "transient", "label": "dog", "action": "stop"},
  {"id": 2, "type": "non-transient", "label": "tree", "action": "reroute"}
 ],
 "path_sequence": [
  {"pass": 1, "direction": "north-south", "turn": "left"},
  {"pass": 2, "direction": "south-north", "turn": "right"}
  ],
  "settings": {"speed": "4km/h", "cutting_height": "2 inches"}
 }
```

Further details of the various types of actions are explained with the actuation module **350.**

As noted above, radar measurements may be leveraged by the vision processing unit 320. Radar information may be fed to the path planning module **340** to adapt the vehicle's path and setup parameters in real time. For example, consider an example where the radar information leads to a prediction that a transient object will intersect the planned path. In this case, the path planning module **340** inflates a dynamic keep-out zone whose size is proportional to the object's velocity vector and heading, then selects an alternate waypoint sequence or issues a temporary pause until the zone clears. For non-transient objects the path planning module **340** updates the global occupancy map and modifies subsequent paths so that the obstacle is circumnavigated with an offset margin, ensuring complete coverage without repeated user intervention. In another example, radar-derived range-rate data can also be used to regulate deck height or mowing speed (e.g., slowing the vehicle as rapidly approaching metallic objects are detected) to maintain job quality.

### Actuation

The actuation module **350** executes the planned path and the autonomous actions generated by the path planning module **340.** As the mowing vehicle traverses the planned path, the actuation module **350** performs the determined actions, which may include an action associated with transient objects (e.g., stopping, rerouting, or waiting) or another action associated with non-transient objects (e.g., adjusting the path to traverse around an obstacle or applying buffers). In one or more embodiments, the actuation module **350** directly controls the mobility control system **220** (propulsion system **222** and steering systems) of the mowing vehicle to carry out actions in real time.

In some embodiments, the actuation module **350** may further enforce operational constraints during execution, such as maintaining a safe distance from additional machines operating in the environment remaining within a defined threshold distance from human crew members or operators, and preserving line-of-sight (LOS) communication with the operator when required. For example, the system may detect the locations of multiple machines operating within the vicinity of the mowing vehicle and adjust its path to prevent interference or collision. Similarly, the positions of operators within the vicinity may be continuously monitored, enabling the actuation module **350** to dynamically apply distance thresholds and ensure safe coexistence between autonomous operations and human activity.

The actuation module **350** may modify the operational parameters of the mowing vehicle from the initially set path plan upon receiving updated information from the path planning module 340. In this way, the actuation module 350 dynamically changes parameters such as mowing speed, cutting height, blade engagement, or other machine settings in response to detected changes in object classifications, boundary updates, or environmental conditions. For example, if the path planning module **340** detects new conditions in the mowing environment, the actuation module **350** may update the structured data to reflect modified operational parameters such as:
"settings": {"speed": "4km/h", "cutting_height": "2.5 inches"}
Such operational parameters may also be set manually by operators via the user interface of a client device **250** (e.g., planning application), ensuring that both automated adjustments and user preferences are incorporated into vehicle control.

### Interaction with Operators

The user interface module **360** manages components for a graphical representation of the mowing environment that may be interacted with by an operator. It gathers the necessary components for the client device **250** (e.g., planning application),, such as the boundary map, the planned path, labeled objects, and the operational settings of the mowing vehicle. This information may be compiled and transmitted to the client device **250** where it is presented in an interactive format that allows operators to review, adjust, and confirm the mowing vehicle's configuration and operation. The user interface module may transmit data through application programming interfaces (APIs), and may enable real-time communication between the client device **250** and the mowing vehicle. Such operator interactions and updates may further be stored in cloud storage **260** for later use (e.g., maintaining operation logs, supporting job quality analysis, or reusing boundary, and path configurations in subsequent jobs).

### Job Quality

The job quality module **370** is configured to determine, monitor, and compensate for the quality of mowing operations performed by the mowing vehicle. The job quality module 370 may receive image and/or sensor data acquired by the sensor system **210** and the mobility control system **220** as the vehicle traverses the mowing environment. In one or more embodiments, the job quality module **370** may monitor the mowing vehicle during operation (e.g., while executing a coverage plan across a turf area) to assess mowing performance and job quality.

When the job quality module **370** detects degrading performance, such as uneven cutting, uncut turf strips, or reduced turf health, it may query other modules (e.g., the path planning module **340** or the actuation module **350)** to determine whether the detected issue arises from environmental conditions, transient object interference, or operational parameters of the mowing vehicle. The job quality module **370** may further aggregate relevant data associated with the event, including image data, sensor measurements, machine status, and contextual information, and provide such data for further evaluation and adjustment of mowing operations.

In some embodiments, the job quality module **370** may recommend or initiate compensatory actions to improve job quality. Such actions may include adjusting cutting height, modifying speed, altering mowing patterns, or issuing notifications to the operator through the user interface module **360.** Job quality metrics and corrective actions may also be logged in cloud storage **260** for long-term monitoring, performance reporting, and optimization of future mowing operations.

Systems, devices, and methods of the present invention may also be directed to detecting information related to mow quality, analyzing same, generating or updating a path plan based on same, and commanding a mower accordingly. Information related to mow quality may include, but is not limited to: (1) blade speeds detected/measured by encoders; (2) vehicle speeds detected/measured by encoders; (3) blade torque detected/measured with motor current sensing; (4) pre-cut grass height measured/detected one or more of cameras (stereo depth, depth from mono, depth from machine learning, etc.), LIDAR, ultrasonic sensors, and radar. Moreover, pre-cut grass height can be inferred from cut height and torque speed measurements; (5) grass species can be detected using computer vision and machine learning or deep learning; (6) grass thickness/density can be measured using CV/image analysis, machine learning, deep learning, and combinations thereof; (7) grass health can be measured using CV/image analysis, machine learning, deep learning, or combinations thereof. Moreover, cameras could use multispectral imaging and analysis or Near-InfraRed (NIR); (8) blade sharpness can be inferred from combining torque, blade speed, etc; (9) cut height setting can utilize a variety of machine sensors, including encoders, position sensors, etc.; (10) post cut height could be measured behind the machine using the same methods described above for pre-cut height.

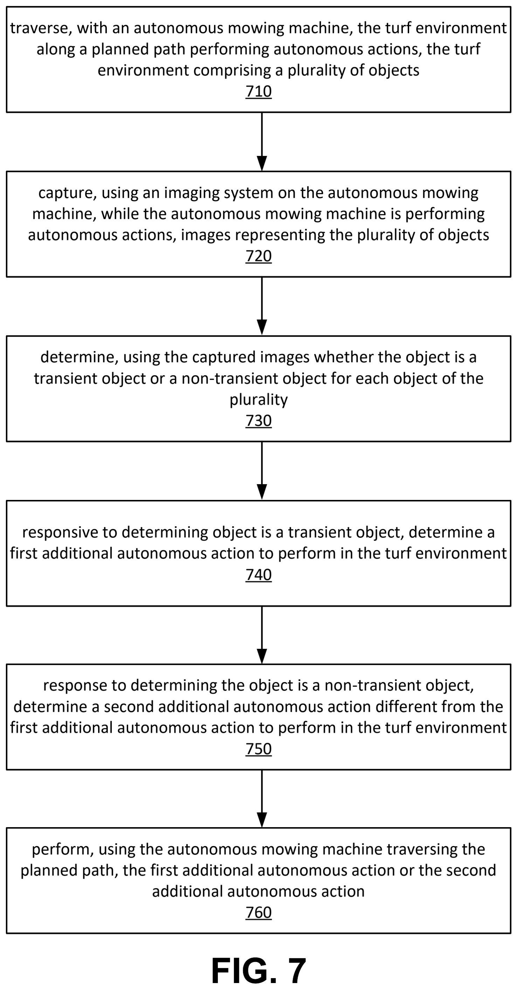

FIG.7 illustrates a workflow diagram for performing autonomous actions in a turf environment, in accordance with one or more embodiments. In one embodiment, the mowing vehicle **200** traverses **710** a turf environment along a planned path while performing mowing actions. As the mowing vehicle **200** operates, an imaging system (e.g., cameras, LIDAR, or other sensors of the sensor system **210)** captures **720** images representing a plurality of objects located within the turf environment. For each detected object, the captured images are analyzed by the vision processing unit **230** of the mowing vehicle **200** to determine **730** whether the object is transient or non-transient. Transient objects may include people, animals, or moving equipment, while non-transient objects may include trees, sidewalks, curbs, and landscaping features. Responsive to determining that an object is transient, the vision processing unit **230** of the mowing vehicle **200** determines **740** a first additional autonomous action, such as stopping, waiting, or rerouting. Responsive to determining that an object is non-transient, the vision processing unit **230** of the mowing vehicle **200** determines **750** a second autonomous action different from the first, such as adjusting the planned path to mow around the object or updating the environmental map. The mowing vehicle **200** then performs **760** the corresponding additional autonomous action while continuing to traverse along the planned path.

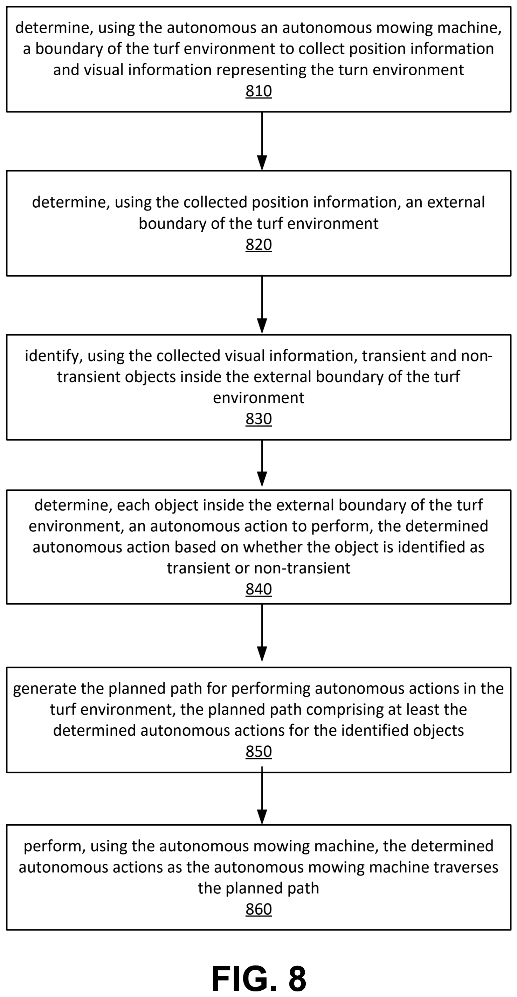

FIG.8 illustrates a workflow diagram for generating a planned path for performing autonomous actions in a turf environment, in accordance with one or more embodiments. In one embodiment, the vision processing unit **230** first determines **810** an area of the turf environment by collecting position information and visual information through sensor system **210** of the mowing vehicle **200.** Using the collected position information, the vision processing unit **230** identifies an external boundary that defines the mowing area. The vision processing unit **230** processes the collected visual information to identify **830** transient and non-transient objects located inside the external boundary. For each object, the vision processing unit **230** determines **840** an autonomous action to perform, where the action is based on whether the object is identified as transient or non-transient. For example, transient objects may trigger actions such as stopping or rerouting, whereas non-transient objects may result in modifications to the planned path to traverse around them. The vision processing unit **230** uses this information and generates **850** a planned path that incorporates the identified objects and their associated autonomous actions. The planned path includes both coverage passes of the turf environment and deviations necessary to account for the detected objects. Finally, the vision processing unit **230** performs **860** the determined autonomous actions as it traverses the planned path, ensuring that the mowing process is carried out safely, efficiently, and with minimal manual intervention.

### III. Example Computing System

The machine may be a server computer, a client computer, a personal computer (PC), a tablet PC, a set-top box (STB), a personal digital assistant (PDA), a cellular telephone, a smartphone, a web appliance, a network router, switch or bridge, or any machine capable of executing instructions **924** (sequential or otherwise) that specify actions to be taken by that machine. Further, while only a single machine is illustrated, the term "machine" shall also be taken to include any collection of machines that individually or jointly execute instructions **924** to perform any one or more of the methodologies discussed herein.

The example computer system **900** includes a processor **902** (e.g., a central processing unit (CPU), a graphics processing unit (GPU), a digital signal processor (DSP), one or more application specific integrated circuits (ASICs), one or more radio-frequency integrated circuits (RFICs), or any combination of these), a main memory **904,** and a static memory **906,** which are configured to communicate with each other via a bus **908.** The computer system **900** may further include visual display interface **910.** The visual interface may include a software driver that enables displaying user interfaces on a screen (or display). The visual interface may display user interfaces directly (e.g., on the screen) or indirectly on a surface, window, or the like (e.g., via a visual projection unit). For ease of discussion the visual interface may be described as a screen. The visual interface **910** may include or may interface with a touch enabled screen. The computer system **900** may also include alphanumeric input device **912** (e.g., a keyboard or touch screen keyboard), a cursor control device **914** (e.g., a mouse, a trackball, a joystick, a motion sensor, or other pointing instrument), a storage unit **916,** a signal generation device **918** (e.g., a speaker), and a network interface device **920,** which also are configured to communicate via the bus **908.**

The storage unit **916** includes a machine-readable medium **922** on which is stored instructions **924** (e.g., software) embodying any one or more of the methodologies or functions described herein. The instructions **924** (e.g., software) may also reside, completely or at least partially, within the main memory **904** or within the processor **902** (e.g., within a processor's cache memory) during execution thereof by the computer system **900,** the main memory **904** and the processor **902** also constituting machine-readable media. The instructions **924** (e.g., software) may be transmitted or received over a network **240** via the network interface device **920.**

While machine-readable medium **922** is shown in an example embodiment to be a single medium, the term "machine-readable medium" should be taken to include a single medium or multiple media (e.g., a centralized or distributed database, or associated caches and servers) able to store instructions (e.g., instructions **924).** The term "machine-readable medium" shall also be taken to include any medium that is capable of storing instructions (e.g., instructions **924)** for execution by the machine and that cause the machine to perform any one or more of the methodologies disclosed herein. The term "machine-readable medium" includes, but not be limited to, data repositories in the form of solid-state memories, optical media, and magnetic media.

### IV. Additional Considerations

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium or in a transmission signal) or hardware modules. A hardware module is tangible unit capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a landscaping environment programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connect the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or processors or processor-implemented hardware modules. The performance of certain of the operations may be distributed among the one or more processors, not only residing within a single machine, but deployed across one or more machines, e.g., computer system 700. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), these operations being accessible via a network (e.g., the Internet) and via one or more appropriate interfaces (e.g., application program interfaces (APIs).)

The performance of certain of the operations may be distributed among the one or more processors, not only residing within a single machine, but deployed across a number of machines. It should be noted that where an operation is described as performed by "a processor," this should be construed to also include the process being performed by more than one processor. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of this specification are presented in terms of algorithms or symbolic representations of operations on data stored as bits or binary digital signals within a machine memory (e.g., a computer memory). These algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. It should be understood that these terms are not intended as synonyms for each other. For example, some embodiments may be described using the term "connected" to indicate that two or more elements are in direct physical or electrical contact with each other. In another example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

Upon reading this disclosure, those of skill in the art will appreciate still additional alternative structural and functional designs for a system and a process for providing CMC change assessment through the disclosed principles herein. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the disclosed principles.

## Claims

1. A method for performing autonomous actions in a turf environment, the method comprising:
traversing, with an autonomous mowing machine, the turf environment along a planned path performing autonomous actions, the turf environment comprising a plurality of objects;
capturing, using an imaging system on the autonomous mowing machine, while the autonomous mowing machine is performing autonomous actions, images representing the plurality of objects;
for each object of the plurality of objects:
determining, using the captured images, whether the object is a transient object or a non-transient object;
responsive to determining the object is a transient object, determining a first additional autonomous action to perform in the turf environment; and
responsive to determining the object is a non-transient object, determining a second additional autonomous action different from the first additional autonomous action to perform in the turf environment; and
performing, using the autonomous mowing machine traversing the planned path, the first additional autonomous action or the second additional autonomous action.

2. The method of claim 1, wherein determining whether the object is a transient object or a non-transient object comprises using both depth information and visual information from the imaging system.

3. The method of claim 1 or claim 2, wherein the first additional autonomous action for an object identified as a transient object comprises at least one of: stopping the autonomous mowing machine, slowing the autonomous mowing machine, rerouting around the transient object, or waiting for a movement of the transient object.

4. The method of claim 1 or claim 2, wherein the second additional autonomous action for an object identified as a non-transient object comprises at least one of: modifying the planned path to a predefined distance to the non-transient object, avoiding the non-transient object by another predetermined distance, updating a boundary map, or storing location information of the non-transient object in a data storage.

5. The method of claim 1, claim 2 or claim 4, further comprises:
determining that the non-transient object is in motion;
in response, modifying a label of the non-transient object to transient object; and
modifying the planned path and actuate the modified planned path.

6. The method of claim 1, claim 2 or claim 4, further comprises:
determining that the non-transient object is instead a transient object;
in response, modifying a label of the transient object to non-transient object; and
in response, performing the first additional autonomous action instead of the second additional autonomous action.

7. The method of any one of the preceding claims, wherein determining whether the object is a transient object or a non-transient object further comprises:
receiving, from a client device in communication with the autonomous mowing machine, a modification to a label of the determination.

8. The method of claim 7, wherein the autonomous mowing machine performs the first additional autonomous action or the second additional autonomous action based on the modification to the label received from the client device.

9. A non-transitory computer readable storage medium comprising instructions for performing autonomous actions in a turf environment, the instructions, when executed by one or more processors, causing the processors to perform the method of any one of claims 1 to 8.

10. An autonomous mowing machine comprising:
an imaging system configured to capture images representing a plurality of objects in a turf environment;
a navigation system configured for controlling traversal of the autonomous mowing machine in the turf environment;
one or more processors;
a non-transitory computer readable storage medium comprising instructions for performing autonomous actions in the turf environment, the instructions, when executed by one or more processors, causing the processors to perform steps comprising:
traversing, using the navigation system, the turf environment along a planned path performing autonomous actions, the turf environment comprising a plurality of objects;
capturing, using the imaging system and while the autonomous mowing machine is performing autonomous actions, images representing the plurality of objects;
for each object of the plurality:
determining, using the captured images, whether the object is a transient object or a non-transient object;
responsive to determining the object is a transient object, determining a first additional autonomous action to perform in the turf environment; and
response to determining the object is a non-transient object, determining a second additional autonomous action different from the first additional autonomous action to perform in the turf environment; and
performing, using the autonomous mowing machine traversing the planned path, the first additional autonomous action or the second additional autonomous action.

11. The autonomous mowing machine of claim 10, wherein determining whether the object is a transient object or a non-transient object further causes the one or more processors to use both depth information and visual information from the imaging system.

12. The autonomous mowing machine of claim 10 or claim 11, wherein the first additional autonomous action for an object identified as transient a transient object comprises at least one of: stopping the autonomous mowing machine, slowing the autonomous mowing machine, rerouting around the transient object, or waiting for a movement of the transient object.

13. The autonomous mowing machine of claim 10 or claim 11, wherein the second additional autonomous action for an object identified as a non-transient object comprises at least one of: modifying the planned path to a predefined distance to the non-transient object, avoiding the non-transient object by another predetermined distance, updating a boundary map, or storing location information of the non-transient object in a data storage.
